(19) Europäisches Patentamt
European Patent Office
Office européen des brevets

(11) EP 3 789 523 A1

(12) EUROPEAN PATENT APPLICATION

(43) Date of publication:
**10.03.2021 Bulletin 2021/10**

(21) Application number: **19195586.3**

(22) Date of filing: **05.09.2019**

(51) Int Cl.:
***D01D 5/00*** *(2006.01)*
***D01F 1/10*** *(2006.01)*
***H03K 17/96*** *(2006.01)*
***C08L 69/00*** *(2006.01)*
***D04H 1/728*** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **FARAH, Abdiaziz A.**
  **23955-6900 Thuwal (SA)**
- **FRESCAS, Jesus Alfonso Caraveo**
  **23955-6900 Thuwal (SA)**
- **AL-MAGHATHUWI, Ramzi Salem**
  **23955-6900 Thuwal (SA)**
- **JALAL, Taghreed A.**
  **23955-6900 Thuwal (SA)**

(74) Representative: **Elzaburu S.L.P.**
**Miguel Angel 21, 2nd floor**
**28010 Madrid (ES)**

# (54) NANOFIBERS FORMED FROM A BLEND OF PHOTOACTIVE THERMOPLASTIC POLYMER AND TRIFLUOROPROPYL POLYHEDRAL SILSESQUIOXANE AND METHODS FOR USING THEM

(57) A polymer nanofiber includes: from 80 wt% to 99 wt% of a photoactive polycarbonate copolymer (XPC); and from 1 wt% to 20 wt% trifluoropropyl polyhedral oligomeric silsesquioxane (F-POSS). A method of making polymer nanofibers includes combining from 80 wt% to 99 wt% of a photoactive polycarbonate copolymer (XPC) with from 1 wt% to 20 wt% trifluoropropyl polyhedral oligomeric silsesquioxane (F-POSS) in a solvent; dissolving the XPC and F-POSS in the solvent to form a solution; and electrospinning the solution to form the polymer nanofibers.

EP 3 789 523 A1

## Description

### FIELD OF THE DISCLOSURE

The present disclosure relates to polymer nanofibers, and more specifically to polymer nanofibers including a photoactive polycarbonate copolymer and trifluoropropyl polyhedral oligomeric silsesquioxane.

### BACKGROUND OF THE DISCLOSURE

In general, smart fabrics and notably electronic textiles can be regarded as multifunctional wearable human interfaces, capable of making daily life healthier, safer and more comfortable. They are able to sense or stimulate properties and are capable of transmitting and processing data. The convergence of information technologies and advances in textile materials fabrication has also contributed to a rapid development of intelligent textile fabrics. Smart textiles are web-structured fabrics that can sense and react to various environmental stimuli, which can include mechanical, thermal, chemical, biological, and magnetic. Early applications for these materials were initially confined to military and defense fields but has since expanded to biomedal and human interfaced optoelectronics applications.

The incorporation of miniature electronic devices into textiles has also proven to have a positive impact on vital signs and physical well-being monitoring which could result in healthier lifestyles. These intelligent textile devices have been used to sense body motions like the twisting of a wrist and bending of a knee using piezoresistive properties that are senses in many cases by piezo-active polymers. In piezoelectric materials, a voltage is generated by a mechanical stress. This effect is reversible; i.e., a piezoelectric material will produce a mechanical action when excited by an electrical potential. The use of polymers printed on flexible sheets allows the production of extremely flexible and sensitive sensors that can be integrated into fabrics with relative ease.

There are a number of ways to develop sensors adequate for integration into textiles: in one aspect, conductive threads are embroidered into textiles to make sensors. Several types of inductive, capacitive or resistive sensors (sensors varying inductance, capacitance or resistance with geometrical, physical influences or chemical influences) have been reported. Integrated touch and force sensors have been fabricated on rigid substrates such as silicon or on optically transparent substrates such as glass or Pyrex. Flexible substrates have also been integrated into smart textiles, which are intended to improve interfacial contact with human skin and sensor fabrication costs. One known flexible polymer is poly(dimethylsiloxane) (PDMS). Unfortunately, PDMS is excluded frequently because it has a high permeability, natural hydrophobicity and poor ageing performance. Therefore numerous other polymers are being investigated currently as alternatives to PDMS. One example is polyimide, which is a flexible dielectric polymer with excellent thermal stability and high solvent resistance. Other materials used in triboelectric-based sensors include polytetrafluoroethylene (PTFE), poly(methyl methacrylate) (PMMA), polyimide (PI), polyamide (PA), nylon, polyvinylidene fluoride or polyvinylidene difluoride (PVDF), and its copolymers such as polyvinylidene difluoride trifluoroethylene (PVDF-TrFE) and polyvinylidene difluoride trifluoroethylene chlorofluoroethylene (PVDF-TrFE-CFE). Despite these materials exhibiting good triboelectric properties (especially those being highly electronegative), surface nanostructuring is required to improve their voltage output. For materials such as PDMS or PMMA, very thick layers are required, which significantly affects their optical properties (in particular their transparency) and cost.

These and other shortcomings are addressed by aspects of the disclosure.

### SUMMARY

Aspects of the disclosure relate to a polymer nanofiber including: from 80 wt% to 99 wt% of a photoactive polycarbonate copolymer (XPC); and from 1 wt% to 20 wt% trifluoropropyl polyhedral oligomeric silsesquioxane (F-POSS).

Aspects of the disclosure further relate to a method of making polymer nanofibers, including, combining from 80 wt% to 99 wt% of a photoactive polycarbonate copolymer (XPC) with from 1 wt% to 20 wt% trifluoropropyl polyhedral oligomeric silsesquioxane (F-POSS) in a solvent; dissolving the XPC and F-POSS in the solvent to form a solution; and electrospinning the solution to form the polymer nanofibers.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a schematic diagram of a single-electrode triboelectric sensor formed according to aspects of the disclosure.
FIG. 2 is a graph of voltage characteristics of XPC-F-POSS polymer nanofibers formed according to aspects of the disclosure.
FIG. 3 is schematic diagram of a dual-electrode triboelectric sensor formed according to aspects of the disclosure
FIG. 4 is a block diagram showing a basic operation principle of a touch/force sensor formed according to aspects of the disclosure.
FIG. 5 is schematic for a process for electrospinning polymer nanofibers according to aspects of the disclosure.
FIGS. 6A-6H are scanning electron microscopy images of fibers formed using various types and concentrations of polymer solvents according to aspects of the disclosure.
FIG. 6I is an optical image of an electro-spun nanofiber formed according to aspects of the disclosure.
FIG. 7 are thermogravimetric analysis (TGA) curves for XPC-F-POSS nanofiber fabric and comparative polymers.
FIG. 8 are images demonstrating the hydrophobicity of polymer nanofiber fabrics formed according to aspects of the disclosure.
FIG. 9 is an elemental composition analysis for nanofibers formed according to aspects of the disclosure.
FIGS. 10A-10D are high resolution spectra for nanofibers formed according to aspects of the disclosure.
FIG. 11 provides output voltage performance data for comparative triboelectric sensors and a triboelectric sensor formed according to aspects of the disclosure.
FIG. 12 is an image of a triboelectric sensor formed according to aspects of the disclosure.
FIG. 13 provides output voltage performance data for comparative triboelectric sensors and a triboelectric sensor formed according to aspects of the disclosure.

## DETAILED DESCRIPTION

The present disclosure can be understood more readily by reference to the following detailed description of the disclosure and the Examples included therein. In various aspects, the present disclosure pertains to a polymer nanofiber including: from 80 wt% to 99 wt% of a photoactive polycarbonate copolymer (XPC); and from 1 wt% to 20 wt% trifluoropropyl polyhedral oligomeric silsesquioxane (F-POSS).

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular

value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where Mi is the molecular weight of a chain and Ni is the number of chains of that molecular weight. Mn can be determined for polymers, e.g., polycarbonate polymers, by methods well known to a person having ordinary skill in the art using molecular weight standards, e.g. polycarbonate standards or polystyrene standards, preferably certified or traceable molecular weight standards.

The terms "BisA," "BPA," or "bisphenol A," which can be used interchangeably, as used herein refers to a compound having a structure represented by the formula:

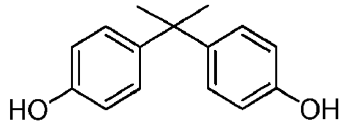

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Polymer Nanofiber and Triboelectric Sensor Including the Nanofiber**

Aspects of the disclosure relate to a polymer nanofiber including: from 80 wt% to 99 wt% of a photoactive polycarbonate copolymer (XPC); and from 1 wt% to 20 wt% trifluoropropyl polyhedral oligomeric silsesquioxane (F-POSS).

XPC is a photoactive cross-linkable polycarbonate resin that includes 0.5 mole % to 5.0 mole % endcap groups derived from monohydroxybenzophenone, including from 1.0 mole % to 5.0 mole, or from 1.5 mole % to 4.5 mole %, or from 2.0 mole % to 4.5 mole %, or from 2.5 mole % to 4.0 mole %, or from 3.0 mole % to 4.0 mole % endcap groups derived from the monohydroxybenzophenone. Most desirably, the monohydroxybenzophenone is 4-hydroxybenzophenone. In a particular aspect the resin includes 3.5 mole % endcap groups derived from 4-hydroxybenzophenone, as shown in formula (1) below:

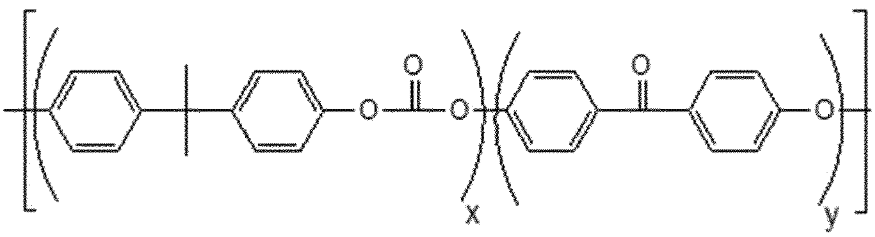

y = 3.5% (1)

XPC may be formed in accordance with the methods described in U.S. Patent Publication No. 2017/0247507, the disclosure of which is incorporated herein by this reference in its entirety. In one aspect the XPC is derived from bisphenol-A polycarbonate and includes 3.5 mole % benzophenone moieties.

F-POSS is trifluoropropyl polyhedral oligomeric silsesquioxane, and has the chemical structure shown in formula (2):

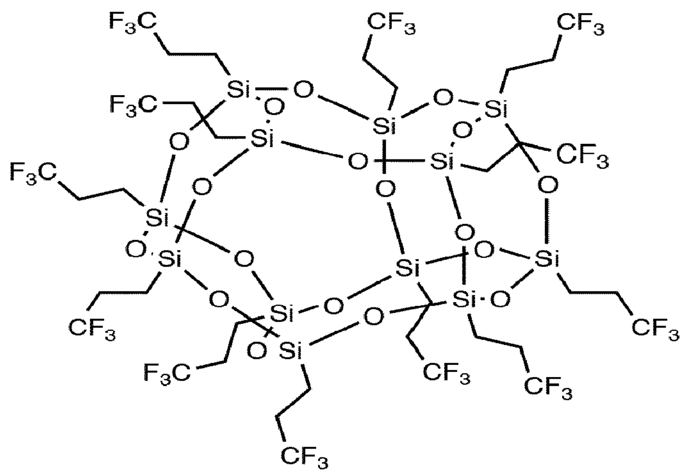

(2)

In some aspects the nanofiber includes from 80 wt% to 90 wt% XPC and from 10 wt% to 20 wt% F-POSS. In further aspects the polymer nanofiber includes 85 wt% XPC and 15 wt% F-POSS.

The polymer nanofibers formed according to aspects of the disclosure are thermally stable. In some aspects, thermal stability means that the polymer nanofiber has a weight loss of less than 1 wt% at 450 degrees Celsius (°C) as determined by a thermogravimetric analysis (TGA) in a nitrogen environment in accordance with ASTM E1131.

The polymer nanofibers may be formed into a yarn in some aspects, such as but not limited to a spun yarn or a filament yarn, according to conventional methods well known to those skilled in the art. In certain aspects the yarn is formed into a fabric. In yet further aspects the polymer nanofibers are formed directly into a fabric or fiber sheet, such as a nonwoven fabric. Methods for forming fabrics/sheets from fibers and/or yarn are well known to those skilled in the art.

In some aspects fabrics and sheets formed from the polymer nanofibers are hydrophobic, or in particular aspects the fabrics/sheets are superhydrophobic. As used, herein, a fabric/sheet is hydrophobic if it has a water contact angle of at least 90 degrees, and a fabric/sheet is superhydrophobic if it has a water contact angle of at least 150 degrees. In certain aspects the fabric/sheet has a water contact angle of at least 120 degrees, or at least 125 degrees, or at least 130 degrees, or at least 135 degrees, or at least 140 degrees, or at least 145 degrees, or at least 150 degrees, or at least 155 degrees, or at least 160 degrees, or at least 165 degrees. Water contact angle is determined by measuring the contact angle of a drop with the solid surface of the fabric/sheet. A high water contact angle hydrophobicity, or nonwetting, of the fabric/sheet.

The mechanism of triboelectric technology is based on the coupling effects of triboelectric and electrostatic induction, as already known and well investigated. The charge density accumulated during a contact event increases with the applied mechanical pressure due to an increase in the contact area between corresponding active layers. Electrons are transferred due to the potential difference between the electrode and the ground in the forward and backward directions. FIG. 1 shows a schematic diagram of a single-electrode triboelectric sensor according to aspects of the disclosure. The sensor includes a first substrate, a first conductive layer and a first triboelectric active film layer including a plurality of the polymer nanofibers described herein. Voltage generated by contact with the first triboelectric active film layer is conducted by the first conductive layer to circuit elements which may convert the voltage to a digital signal.

The substrate layer may be flexible or rigid and may include, but is not limited to, a metal, a glass, a composite, a polymer, or a combination thereof. Exemplary polymers include, but are not limited to, poly(methyl methacrylate) (PMMA), silicon, polyethylene naphthalate (PEN), polyethylene terephthalate (PET), polyetherimide (PEI), polycarbonate (PC), polyimide (PI), polyetherimide (PEI), copolymers thereof, and combinations thereof.

The first conductive layer may include, but is not limited to, tin oxide, cadmium oxide, indium oxide, zinc oxide, magnesium oxide, indium tin oxide (ITO), gold, silver, or a combination thereof.

As shown in FIG. 1, voltage is generated by an external material such as a human finger or other material that has an electro affinity opposite that of the first triboelectric active film layer including the XPC-F-POSS polymer nanofibers. FIG. 2 shows the common voltage characteristics obtained when using the XPC-F-POSS nanofibers in the single electrode configuration of FIG. 1. A voltage peak is obtained when the finger contacts the surface of the film layer, while another peak (with a different polarity) is generated upon release, in accordance with the principle of contact electrification.

In another aspect illustrated in FIG. 3, the triboelectric sensor could include at least two electrodes, including a first electrode, first substrate and first triboelectric active film layer including the XPC-F-POSS polymer nanofibers described above and a second electrode, second substrate and second triboelectric active film separated by spacers.

The second electrode and second substrate can include the same or different electrode and substrate materials previously described. The second triboelectric active film may have an electropositive material having an electro affinity opposite that of the first triboelectric active film layer. In some aspects the electropositive material includes poly(methyl methacrylate) (PMMA), rubber, nylon, or a combination thereof.

FIG. 4 shows the basic operation principle of the touch/force sensor using XPC-F-POSS nanofiber as the electronegative triboelectric layer. A touch/force event acts as the input signal of the sensor. As an example, a human finger interacts with the triboelectric sensor. Voltage is generated on the basis of the contact electrification principle (triboelectric charges) when the touch/force event happens. The magnitude of the output voltage is directly proportional to the force exerted on the sensor. The read-out circuitry interprets this voltage (analog signal) and may convert it to a digital signal. The read-out circuitry interfaces with other circuit elements/electronics to send either the voltage level or the digital equivalent to a processing unit, where the appropriate action is triggered.

**Methods for Making Polymer Nanofibers**

Aspects of the disclosure further related to a method of making polymer nanofibers, including: combining from 80 wt% to 99 wt% of a photoactive polycarbonate copolymer (XPC) with from 1 wt% to 20 wt% trifluoropropyl polyhedral oligomeric silsesquioxane (F-POSS) in a solvent; dissolving the XPC and F-POSS in the solvent to form a solution; and electrospinning the solution to form the polymer nanofibers.

Electrospinning (ES) a desirable method for making a large volume of continuous nanofibers from all polymers with minimum contamination. It is a simple technique to use, cost-effective, reliable, versatile, and scalable for large production of functional fibers. The process includes three simple and interconnected components, as shown in FIG. 5, including (1) a capillary tube (sample reservoir) with a pipette or needle of small diameter, (2) a high-voltage supplier, and (3) a sample or fiber collector. Various fibrous assemblies and morphologies can be obtained by adjusting the electrospinning set-up and experimental conditions. Numerous variables can be adjusted to modify the nanofiber properties, including but not limited to polymer properties (e.g., polymer molecular weight), solvent properties and type, additives, field strength, nozzle orifice diameter, and collector panel distance from the nozzle. In the examples set forth below, these variables were all kept constant except the solvent type and solvent composition.

Suitable solvents for use in the methods described herein include, but are not limited to, dimethylformamide (DMF), tetrahydrofuran (THF), and combinations thereof. In particular aspects the solvent includes from 40 wt% to 60 wt% DMF and from 40 wt% to 60 wt% THF. In a particular aspect the solvent includes 50 wt% DMF and 50 wt% THF.

In one aspect from 80 wt% to 90 wt% XPC and from 10 wt% to 20 wt% F-POSS are combined in the solvent. In another aspect 85 wt% XPC and 15 wt% F-POSS are combined in the solvent.

The polymer nanofibers have an average diameter of from 25 nanometers (nm) to 1000 nm in some aspects. In further aspects the polymer nanofibers have an average diameter of from 25 nm to 500 nm, or from 25 nm to 200 nm, or from 25 nm to 150 nm, or from 25 nm to 100 nm, or from 50 nm to 500 nm, or from 50 nm to 200 nm, or from 50 nm to 150 nm, or from 50 nm to 100 nm. The diameter of the polymer nanofibers may be determined by conventional methods, including but not limited to scanning electron microscopy (SEM) imaging and the use of a digital micrometer apparatus.

In particular aspects the electrospinning is performed at a voltage of 20 kilovolts (KV), a spinning distance of 15 centimeters (cm), and a solution flow rate of 0.5 milliliter per hour (mL/h).

The polymer nanofibers may be formed into a yarn in some aspects, such as but not limited to a spun yarn or a filament yarn. In certain aspects the yarn is formed into a fabric. In yet further aspects the polymer nanofibers are formed directly into a fabric or sheet, such as a nonwoven fabric.

Triboelectric sensors having the polymer nanofibers described herein have improved performance as compared to conventional triboelectric sensors. In one aspect, the sensor provides an output voltage that is at least 25% higher than an output voltage of a substantially identical sensor that includes a first triboelectric active film including an XPC-F-POSS polymer film layer instead of the plurality of polymer nanofibers. In other aspects, the sensor provides an output voltage that is at least 40% higher, or at least 50% higher, or at least 75% higher, or at least 100% higher, than an output voltage of a substantially identical sensor that includes a first triboelectric active film including an XPC-F-POSS polymer film layer instead of the plurality of polymer nanofibers. As described herein, a "substantially identical sensor" is a reference or comparative sensor that includes identical components as the inventive sensor except that the first triboelectric active film including the plurality of polymer nanofibers is replaced with an XPC-F-POSS polymer film layer.

Features of the polymer nanofibers, yarns, fabrics and sheets formed therefrom, and triboelectric sensors formed therefrom include, but are not limited to:

- Better transparency in the visible region achieved when compared to conventional materials due to the intrinsic properties of the XPC-F-POSS nanofibers as well as the reduced required thickness
- Enhanced dispersability of F-POSS in XPC fiber morphology

- Excellent thermal property due to F-POSS in XPC fiber morphology
- Ability to covalently attach F-POSS to XPC fibers photochemically in one single step
- Excellent processing advantages (encapsulation, crosslinking and locking in)
- Minimum number of processing steps, resulting in a cost-effective solution
- Tolerant to harsh experimental processing condition (chemical, thermal, abrasion and UV resistant)
- Multiple chemical binding site (copolymer)-excellent adhesion promoter for different application
- Excellent functional nanofibers for use in nanotemplating, nanopatterning and self-assembling for thin film processes
- Excellent surface functionalization platform for different applications
- Electronic fabric with: high durability, high extensibility, superior processability
- Enhanced smart fabric properties: water-repellency, long lasting fabric tenacity (survives successive washings/wearings)
- Intelligent fabric with: excellent breathability along with good tactile performance
- Intelligent fabric with range of unique properties (resist spills, repel and release stains, resist static
- Electronic textiles with improved performance (proven triboelectric property and triboelectric driven energy harvester)

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A polymer nanofiber comprising:

from 80 wt% to 99 wt% of a photoactive polycarbonate copolymer (XPC); and
from 1 wt% to 20 wt% trifluoropropyl polyhedral oligomeric silsesquioxane (F-POSS).

Aspect 2. The polymer nanofiber according to claim 1, wherein the nanofiber comprises from 80 wt% to 90 wt% XPC and from 10 wt% to 20 wt% F-POSS.
Aspect 3. The polymer nanofiber according to claim 1 or 2, wherein the XPC is derived from bisphenol-A polycarbonate and comprises from 3.0 mole % to 4.0 mole % benzophenone moieties.
Aspect 4. The polymer nanofiber according to any of claims 1 to 3, wherein the polymer nanofiber is thermally stable.
Aspect 5. The polymer nanofiber according to claim 4, wherein the thermal stability comprises a weight loss of less than 1 wt% at 450 degrees Celsius (°C) as determined by a thermogravimetric analysis (TGA) in a nitrogen environment in accordance with ASTM E1131.
Aspect 5A. The polymer nanofiber according to claim 4, wherein the polymer nanofiber has a diameter of from 50 nm to 150 nm.
Aspect 6. A yarn comprising a plurality of the polymer nanofibers according to any of claims 1 to 5A.
Aspect 7. A fabric or sheet comprising a plurality of the polymer nanofibers according to any of claims 1 to 5A.
Aspect 8. The fabric or sheet according to claim 7, wherein the fabric or sheet is superhydrophobic as determined by the fabric or sheet having a water contact angle of at least 150 degrees.
Aspect 9. A sensor comprising:

a first substrate;
a first conductive layer; and
a first triboelectric active film layer comprising a plurality of the polymer nanofibers according to any of claims 1 to 5A.

Aspect 10. The sensor according to claim 9, wherein the first substrate comprises a metal, a glass, a composite, a polymer, or a combination thereof.
Aspect 11. The sensor according to claim 9 or 10, wherein the first conductive layer comprises tin oxide, cadmium oxide, indium oxide, zinc oxide, magnesium oxide, indium tin oxide (ITO), gold, silver, or a combination thereof.
Aspect 12. The sensor according to any of claims 9 to 11, further comprising a second substrate, a second conductive layer, and a second triboelectric active film, wherein the second triboelectric active film has an electron affinity that is opposite that of the first triboelectric active film.
Aspect 13. The sensor according to any of claims 9 to 12, wherein the sensor provides an output voltage that is at least 100% higher than an output voltage of a substantially identical sensor that comprises a first triboelectric active film comprising an XPC-F-POSS polymer film layer instead of the plurality of polymer nanofibers.

Aspect 14. A method of making polymer nanofibers, comprising:

combining from 80 wt% to 99 wt% of a photoactive polycarbonate copolymer (XPC) with from 1 wt% to 20 wt% trifluoropropyl polyhedral oligomeric silsesquioxane (F-POSS) in a solvent;
dissolving the XPC and F-POSS in the solvent to form a solution; and
electrospinning the solution to form the polymer nanofibers.

Aspect 15. The method according to claim 14, wherein the solvent comprises from 40 wt% to 60 wt% dimethylformamide (DMF) and from 40 wt% to 60 wt% tetrahydrofuran (THF).
Aspect 16. The method according to claim 14, wherein the solvent comprises 50 wt% DMF and 50 wt% THF.
Aspect 17. The method according to any of claims 14 to 16, wherein from 80 wt% to 90 wt% XPC and from 10 wt% to 20 wt% F-POSS are combined in the solvent.
Aspect 18. The method according to any of claims 14 to 17, wherein the polymer nanofibers have an average diameter of from 50 nm to 150 nm.
Aspect 19. The method according to any of claims 14 to 18, wherein the electrospinning is performed at a voltage of 20 kilovolts (KV), a spinning distance of 15 centimeters (cm), and a solution flow rate of 0.5 milliliter per hour (mL/h).
Aspect 20. The method according to any of claims 14 to 19, further comprising forming a yarn from the polymer nanofibers.
Aspect 21. The method according to any of claims 14 to 19, further comprising forming a fabric or sheet from the polymer nanofibers.

**EXAMPLES**

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.
There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

**Electrospinning of photoactive (XPC) copolymer and Trifluoropropyl polyhedral oligomeric silsesquioxane (F-POSS) formulation for a triboelectric active fabric**

**Nanomaterial preparation:** Electrospinning is a versatile process to produce submicron polymer fibers having high surface to volume ratio. Long intertwined nanofibers were fabricated from a photoactive (XPC) copolymer and trifluoropropyl polyhedral oligomeric silsesquioxane (F-POSS) formulation (85 wt% XPC/ 15 wt% F-POSS) via electrospinning. The photochemical processes occurring in benzophenone-polycarbonate copolymer surfaces leads to concurrent encapsulating, crosslinking and locking in the physio-sorbed F-POSS molecules onto photoactive nanofibers. The photoactive substrate is a copolymer of polycarbonate thermoplastics containing (3.5%) of benzophenone moieties. Benzophenone is a well-known photoactive material because of its ability to attach to C-H bonds in a wide range of chemical environments. The photoactive copolymer (XPC) and the F-POSS molecules in the form of pellets/solid were completely dissolved in a THF/DMF solution (50:50 volume per volume (v/v)) mixture to prepare a 20% weight per volume (w/v) solution and stirred at 40 degrees Celsius (°C) for 5 hours (hrs). The solution was then loaded into a 5 milliliter (mL) plastic syringe with a 21 gauge (G) steel needle. The electrospinning was carried out using a MECC NANNON electrospinning setup under the following conditions: Voltage (20 kilovolt (KV)), a 15 centimeter (cm) spinning distance, and a 0.5 milliliter per hour (mL/h) flow rate. The resulting nanofibers were collected on planar collector covered with aluminum foil. The surface morphology of the fibers was observed using a scanning electron microscopy (SEM) (Fei quanta 600). XPS was performed in a UHV system with a base pressure of $1 \times 10^{-9}$ millibar (mbar) equipped with a SPECS XR50 dual anode X-ray source (Mg K$\alpha$ was utilized) and Scienta R3000 hemispherical electrostatic energy analyzer. The samples were loaded on a tantalum plate using a 13 millimeter (mm) carbon tap. XPS measurements were collected at 90 degree (°) angle with respect to the analyzer. The XPS data analysis was performed using THERMO AVANTAGE software by Thermo Fisher Scientific. XPS spectra of F 1s, Si 2p, C 1s and O 1s were collected. Typical acquisition conditions were as follows: pass energy = 50 electron volts (eV) and scan rate = 0.1 eV per 200 milliseconds

(ms). Thermogravimetric (TGA) measurements were carried out on Q500 TGA (TA Instruments, USA) at a heating rate of 10 °C /minute (min) from room temperature to 600 °C under a nitrogen environment.

The effect of varying polymer solution type and composition on nanofiber properties was evaluated. The characteristic solvent properties of dimethylformamide (DMF) and Tetrahydrofuran (THF), are listed in Table 1:

**Table 1 - Solvent Properties**

| Solvent properties type | DMF | THF |
|---|---|---|
| Molecular weight (Mw) | 73 | 72 |
| Chemical formula | $C_3H_7NO$ | $C_4H_8O$ |
| Boiling point (°C) | 153 | 66 |
| Density (g/cc) | 0.94 | 0.88 |
| Solubility parameter | 12.1 | 9.1 |
| Dipole (D) | 3.8 | 1.75 |
| Dielectric constant | 36.7 | 7.6 |
| Polarity (water 100) | 40.4 | 21 |
| Surface tension (20°C/dyn/cm) | 35 | 28 |
| Absolute viscosity (20°C/dyn/cm) | 0.38 | 0.55 |

Relevant controlling factors for electrospinning fiber forming include solvent surface tension, solvent vapor pressure, dielectric constant, polymer composition, and solution viscosity.

XPC-F-POSS polymer nanofibers were formed by varying the content of THF and DMF in the polymer solution mixture. Representative scanning electron microscopy (SEM) images of fibers formed from each mixture are provided in FIGS. 6A-6H, as follows: THF:DMF (0:100) (FIG. 6A); THF:DMF (20:80) (FIG. 6B); THF:DMF (30:70) (FIG. 6C); THF:DMF (100:0) (FIG. 6D); THF:DMF (80:20) (FIG. 6E); THF:DMF (70:30) (FIG. 6F); THF:DMF (50:50) (FIG. 6G); and THF:DMF (50:50) (FIG. 6H). An optical image (photograph) of an electro-spun nanofiber with DMF:TFH (50:50) solvent is shown in FIG. 6I.

The SEM images of the electro spun polymer solution with high a volume of DMF as shown in FIGS. 6A-6C reveal spherical shaped microbeads. Upon applying a fixed electrical potential across the source tip and the fiber sample collector, a solution jet accelerates from the source tip to the collector. Thereafter the solution jet is stretched and surface tension forces may result in the fragmentation of the jet into tiny droplets of variable sizes. The SEM images in 6A with 100% DMF polymer solution clearly support this hypothesis as it reveals high-density microbeads displaying rough surface morphologies and with variable diameters in the range of 5 μm to 500 nm. Salient solvent parameters such as high surface tension and dielectric constant in conjunction with low solvent vapor pressure have been attributed to the formation of microbeads without any significant fiber formation. As the weight percentage of THF was increased (FIGS. 6B and 6C), the size and roughness of the microbeads is diminished to some extent, although fiber formation does not yet occur. As the polymer solution (solvent) content become THF-rich (FIGS. 6D, 6E and 6F), wrinkled structures with fewer microbeads are formed and mixed thin and thick-wall nanofibers having air-filled voids are evident. The appearance of the wrinkled morphologies is related to the relative rates of evaporation of the solvent from the surface of the polymer solution jet. The solution is essentially a polymer dissolved in a volatile-rich solvent, THF in this case or an increasing weight percentage mixture of tetrahydrofuran and dimethylformamide. During the flight of the polymer jet released from the tip of the source to the collector, the resulting solid polymer starts to elongate and shrink drastically in diameter. This electrospinning event triggers an increase of the specific surface area of the resultant solid polymer due to an enhanced rate of evaporation of the volatile solvent from the solution jet. The net result is the increase of thinner diameter nanofibers along with wrinkled structures in the mass as the volume of the volatile solvent is increased in the polymer solution mixture as shown in FIGS. 6E and 6F. Finally, electro-spun polymer prepared from a 50/50 mixture THF/DMF results in formation of a more homogenous fiber structure with a submicron diameter and 500-700 micron length thick walls, as shown in FIGS. 6G (enlarged) and 6H.

Thermal stability of the electro-spun nanofabric was evaluated by thermogravimetric analysis (TGA) under a nitrogen environment. TGA curves of the photoactive resin (XPC), trifluoropropyl polyhedral oligomeric silsesquioxane (F-POSS) molecule and the electro-spun XPC-F-POSS nanofabric are illustrated in FIG. 7. One single decomposition step is observed for all samples. The initial decomposition temperature (IDT) corresponding to the temperature at which the material started to decompose (minimally with less 5% weight loss) was determined from the TGA experiments.

The weight loss of XPC and F-POSS molecule with less than 1% weight loss is observed at 260 and 450 °C, respectively. No residual materials were observed up to 800 °C for (F-POSS) and approximately up to 20% carbon tar residue was obtained for (XPC) resin. The data shows an onset of degradation at 165 °C for the electro-spun nanofabric with DMF:THF (50:50) solvent mixture at less 5% weight loss of the total mass. This loss process pattern continues at a slow rate up to 350 °C where the nanofibers start decomposing rapidly up to 600 °C with 80% weight loss of the total mass. The initial decomposition temperature of the nanofibers is in between that of XPC resin and F-POSS as expected. This observed increase in thermal stability for the nanofibers is due to the ordered electro-spun microstructure of fibers.

Water-repellent electronic fabric, possessing a high degree of hydrophobicity, prevents stains and with self-repairing capability could have a broad technological impact for self-cleaning electronic devices. Numerous approaches have been utilized to reproduce such high water-repellent surfaces including but not limited to surface patterning, molecular self-assembly, deposition, and etching techniques. However, all these examples often require aggressive chemical surface treatments, high-temperature post-surface modification, or elaborate processing methods. For such reasons, there exists a demand to engineer hydrophobic materials that are easy to prepare on a large scale. Herein, as shown in FIG. 8 (inset) a simple electrospun processed multifunctional thermoplastic blend, by virtue of its highly ordered fiber structure, in conjunction with terminal low surface energy ($CF_3$) groups of the (F-POSS) moieties, clearly displayed a superhydrophobic property with a high water contact angle of 166°. Moreover, the fabric surface appearance seemed to be defect-tolerant and mechanically robust due to its interconnected and thick wall structure (i.e., 100 microns), leading to efficient water repellency and prevention of adsorption of liquid-borne contaminants as depicted in FIG. 8.

Energy dispersive spectroscopy (EDS), a non-destructive micro-analytical technique, was used to determine the local chemical elements and the compositional homogeneity of the nanofiber microstructure. To this end, the energy analyzer is set on a selected beam power, while the scanning primary-electrons beam is synchronized with a preset speed, to enable the imaging of the element localization of the surface under investigation. The elemental composition analysis shown in FIG. 9 demonstrates that the nanofibers exhibited the expected nanofiber elemental constituents without any other components that hidden under the surface of the nanofiber. X-ray photoelectron spectroscopy (XPS) was employed to probe the chemical composition of the electro-spun nanofabric prepared using (50:50) DMF:THF solvent mixture. FIGS. 10A-10D show representative high-resolution spectra of C 1s, O 1s, F 1s and Si 2p. The survey spectrum (not provided) exhibit the expected nanofiber composition peaks at 99.7, 284.7, 531.9, 687.9 eV corresponding to the binding energies of Si 2p, C 1s, O 1s, and F 1s, respectively. High-resolution XPS scans were also carried out to gain additional insight into the chemical composition of the nanofiber. High-resolution scan for C 1s spectrum as shown in FIG. 10A is deconvoluted into four components with binding energies characteristic of the expected chemical constituents of the nanofiber. Specifically, -C-C/C-H (284.8 eV), -C-O/-CH2CF2-(287.9 eV), -C-C=O (289.8 eV), and -CF3-(294.3 eV) were observed. Peak fitting was used when significant overlap prevented unambiguous deconvolution for binding energies for specific elements, and in this case the presence of attenuated SiO2 peaks of the silicone cage for F-POSS molecule were observed. The O 1s core level peaks are observed at 531.2 eV for (-C-O-C), 532.9 eV for SiO2 and 533.4 eV for (-C-C=O) respectively. The XPS scan for F 1s also confirms the presence of peak at 688.4 eV assigned to fluorine component. XPS data confirms the surface composition of the electro-spun nanofibers with DMF: THF (50:50) solvent mixture as expected.

Standard polycarbonate polymers have excellent impact resistance and lower density than glass but also show lower abrasion, chemical, and ultraviolet (UV) resistance compared to many other polymeric materials. In contrast to standard polycarbonate (PC) polymers, XPC nanofibers have superior chemical and thermal stability. In addition, XPC can be used with synthetic processes that require mutiple functionalization or grafting steps with a minimum materials budget without restricting the attachment of the functional polymer candidate for different applications. It also facilitates a strong encapsulation (in this case (F-POSS)) into the reactive (XPC) support matrix. Realization of such robust and straightforward (F-POSS) encapsualtion onto photoactive nanofiber morpohology is often desired not only to prevent desorption of the encapsulant (e.g., F-POSS) from the surface but also in the view of application of the resulting nanofibers as a building platform for the first time in high performance triboelectric sensor.

To highlight the performance of the XPC-F-POSS nanofibers, comparative triboelectric sensor experiments were carried out separately for each individual component of the formulation (XPC and F-POSS) in addition to an XPC-F-POSS polymer film. Output performance is shown in FIG. 11. Each component was tested at the same thickness (2.8 micron (μm)) and resistance load (500 megaohm (MOhm)). F-POSS shows a higher output voltage than XPC due to its intrinsic higher electronegativity. The XPC-F-POSS polymer film blend (85/15 blend) exhibits a higher output voltage than either individual component. Sensors made with the XPC-F-POSS polymer nanofibers exhibited the highest output voltage than the comparative sensors, and had an output voltage that was 40% higher than that of the sensor including the XPC-F-POSS polymer film.

**Triboelectric** sensor fabrication

Step 1: substrate preparation and cleaning. Two 100 μm substrates, polyethylene terephthalate (PET) and

polyetherimide (Ultem™), substrates were used to build the device. The substrates were cleaned in an ultrasonic cleaner using acetone, isopropanol (IPA) and deionized water for 5 minutes in each solvent and then blown-dried with high purity nitrogen.

Step 2: Electrode deposition and patterning. 50 nanometer (nm) titanium/100 nm gold electrodes were patterned using conventional photolithography techniques and electron beam evaporated. A 4 $\mu$m -thick AZ EC3027 positive photoresist (PR) was first spin-coated on the substrate. The PR layer was then exposed with a broadband UV light source at a dose of 200 millijoule per square centimeter (mJ/cm$^2$) and a photomask was used to transfer the desired features. The PR was then developed using an AZ 726 MIF developer. Ti/Au electrodes were then deposited using an electron beam evaporator without breaking vacuum. Lift-off using acetone was performed lastly to remove the unwanted areas and to complete the patterning process.

Step 3: Triboelectric XPC-F-POSS nanofibers (~ 80-100 $\mu$m thick) were deposited on aluminum foil in duplicate.

Triboelectric sensor characterization

The triboelectric sensor was characterized using a system electrometer, Keithley 6514, to measure the voltage drop across the load. A touch event was simulated by applying force with a pneumatic unit that was stroke-controlled. When the slider touched the sensor, a positive voltage was generated indicating that the sensor had been pressed. Upon release, a voltage with an opposite polarity was measured, in accordance with the mechanism of contact electrification. A custom-made LabVIEW program recorded the voltage generated by the sensor as a function of time.

FIG. 12 shows an image of the fabricated device with an active sensing area of 3.75 cm$^2$ using a single electrode configuration described herein. Output characteristics for XPC-F-POSS nanofibers having 15% wt F-POSS load (85 wt% XPC) is as shown in FIG. 2 where a negative output voltage of more than 12.5 V is generated when a touch event occurred. A positive voltage of nearly 4.5 V was generated when the surface in contact was released, in accordance with the principle of contact electrification.

A comparison of sensors formed with conventional triboelectric materials is shown in FIG. 13. In each example a 2.8 $\mu$m film thickness was used. Example films included polyvinyl chloride (PVC), polyvinylidene difluoride (PVDF), polyvinylidene difluoride trifluoroethylene (PVDF-TrFE) and XPC-F-POSS (15wt%). All films were spin coated on substrates having the same type of electrodes and with similar thicknesses. Characterization was conducted using an electrical load of 500 MOhm. For consistency, all films were measured after the vacuum annealing step and without any further surface modifications. While the sensor formed with the XPC-F-POSS polymer film had a much higher output voltage than that formed with PVDF-TrFE (previously reported as one of the materials with the highest power output), the sensor formed with the XPC-F-POSS polymer nanofibers had an output voltage that was more than 100% higher than even the XPC-F-POSS polymer film sensor.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A polymer nanofiber comprising:

   from 80 wt% to 99 wt% of a photoactive polycarbonate copolymer (XPC); and
   from 1 wt% to 20 wt% trifluoropropyl polyhedral oligomeric silsesquioxane (F-POSS).

2. The polymer nanofiber according to claim 1, wherein the nanofiber comprises from 80 wt% to 90 wt% XPC and from 10 wt% to 20 wt% F-POSS.

3. The polymer nanofiber according to claim 1 or 2, wherein the XPC is derived from bisphenol-A polycarbonate and comprises from 3.0 mole % to 4.0 mole % benzophenone moieties.

4. The polymer nanofiber according to any of claims 1 to 3, wherein the polymer nanofiber has a diameter of from 50 nanometers (nm) to 150 nm.

5. The polymer nanofiber according to any of claims 1 to 4, wherein the polymer nanofiber has a weight loss of less than 1 wt% at 450 degrees Celsius (°C) as determined by a thermogravimetric analysis (TGA) in a nitrogen environment in accordance with ASTM E1131.

6. A fabric or sheet formed from a plurality of the polymer nanofibers according to any of claims 1 to 5, wherein the fabric or sheet has a water contact angle of at least 150 degrees.

7. A sensor comprising:

   a first substrate;
   a first conductive layer; and
   a first triboelectric active film layer comprising a plurality of the polymer nanofibers according to any of claims 1 to 5.

8. The sensor according to claim 7, wherein the first substrate comprises a metal, a glass, a composite, a polymer, or a combination thereof.

9. The sensor according to claim 7 or 8, wherein the first conductive layer comprises tin oxide, cadmium oxide, indium oxide, zinc oxide, magnesium oxide, indium tin oxide (ITO), gold, silver, or a combination thereof.

10. The sensor according to any of claims 7 to 9, further comprising a second substrate, a second conductive layer, and a second triboelectric active film, wherein the second triboelectric active film has an electron affinity that is opposite that of the first triboelectric active film.

11. The sensor according to any of claims 7 to 10, wherein the sensor provides an output voltage that is at least 100% higher than an output voltage of a substantially identical sensor that comprises a first triboelectric active film comprising an XPC-F-POSS polymer film layer instead of the plurality of polymer nanofibers.

12. A method of making polymer nanofibers, comprising:

    combining from 80 wt% to 99 wt% of a photoactive polycarbonate copolymer (XPC) with from 1 wt% to 20 wt% trifluoropropyl polyhedral oligomeric silsesquioxane (F-POSS) in a solvent;
    dissolving the XPC and F-POSS in the solvent to form a solution; and
    electrospinning the solution to form the polymer nanofibers.

13. The method according to claim 12, wherein the solvent comprises from 40 wt% to 60 wt% dimethylformamide (DMF) and from 40 wt% to 60 wt% tetrahydrofuran (THF).

14. The method according to claims 12 or 13, wherein the electrospinning is performed at a voltage of 20 kilovolts (KV), a spinning distance of 15 centimeters (cm), and a solution flow rate of 0.5 milliliter per hour (mL/h).

15. The method according to any of claims 12 to 14, further comprising forming a yarn, a fabric, or a sheet from the

polymer nanofibers.

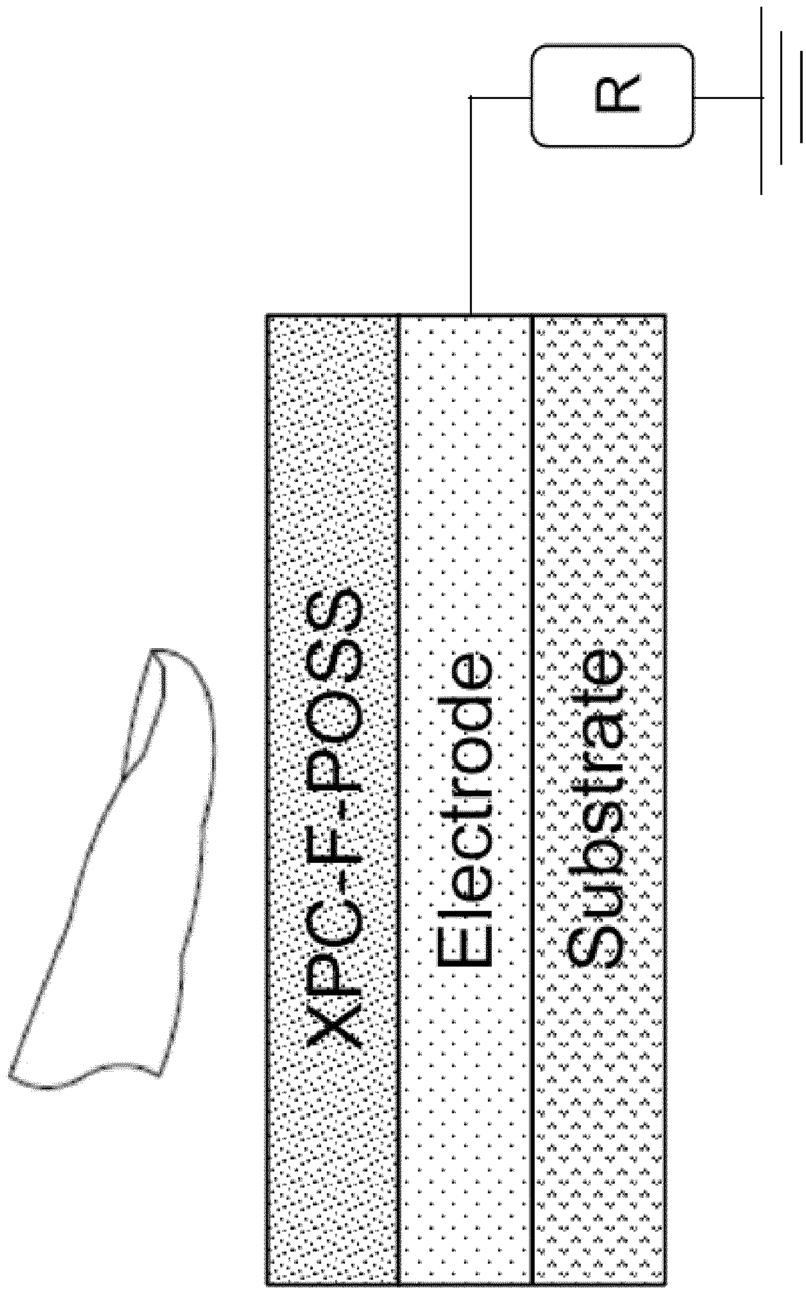


FIG. 1

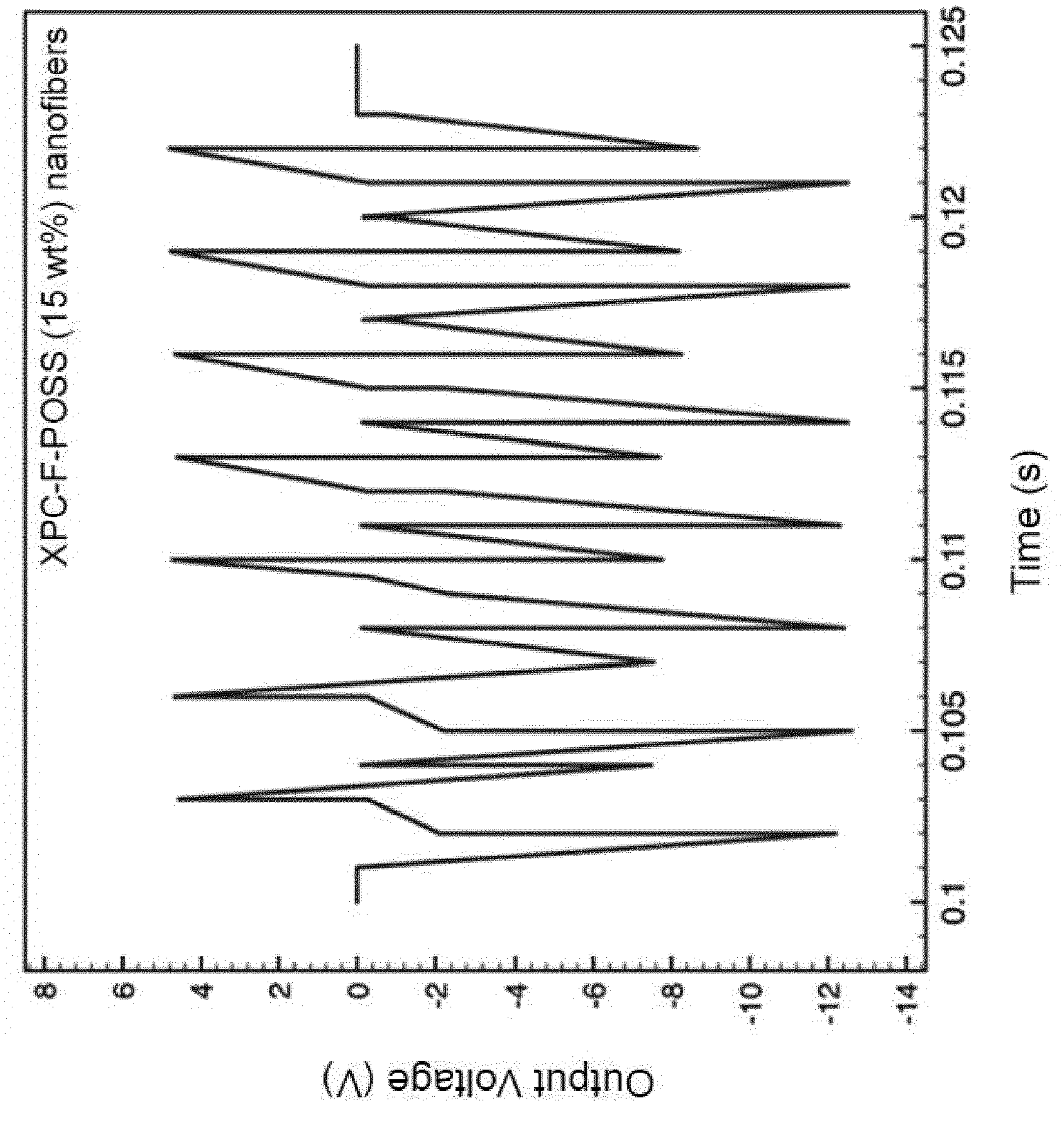
XPC-F-POSS (15 wt%) nanofibers
Output Voltage (V)
8
6
4
2
0
-2
-4
-6
-8
-10
-12
-14
Time (s)
0.1
0.105
0.11
0.115
0.12
0.125

FIG. 2

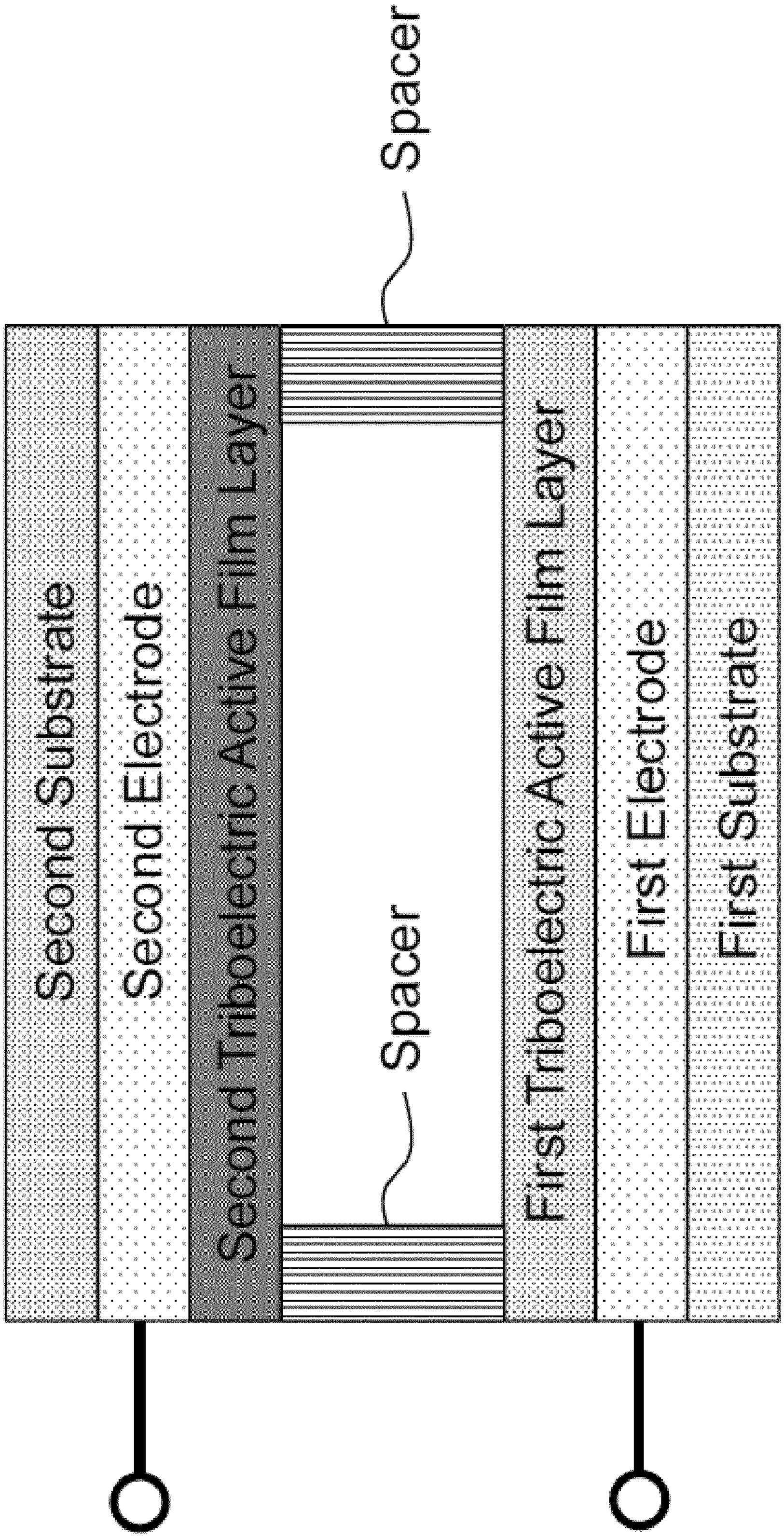
Spacer
Second Substrate
Second Electrode
Second Triboelectric Active Film Layer
Spacer
First Triboelectric Active Film Layer
First Electrode
First Substrate

FIG. 3

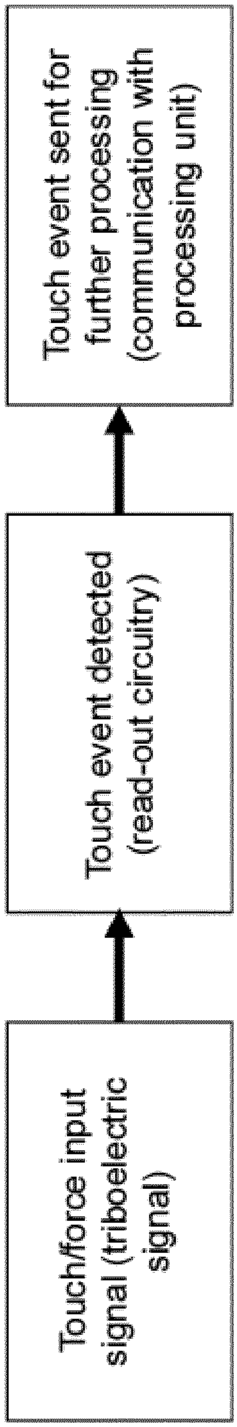
Touch/force input signal (triboelectric signal)
Touch event detected (read-out circuitry)
Touch event sent for further processing (communication with processing unit)

FIG. 4

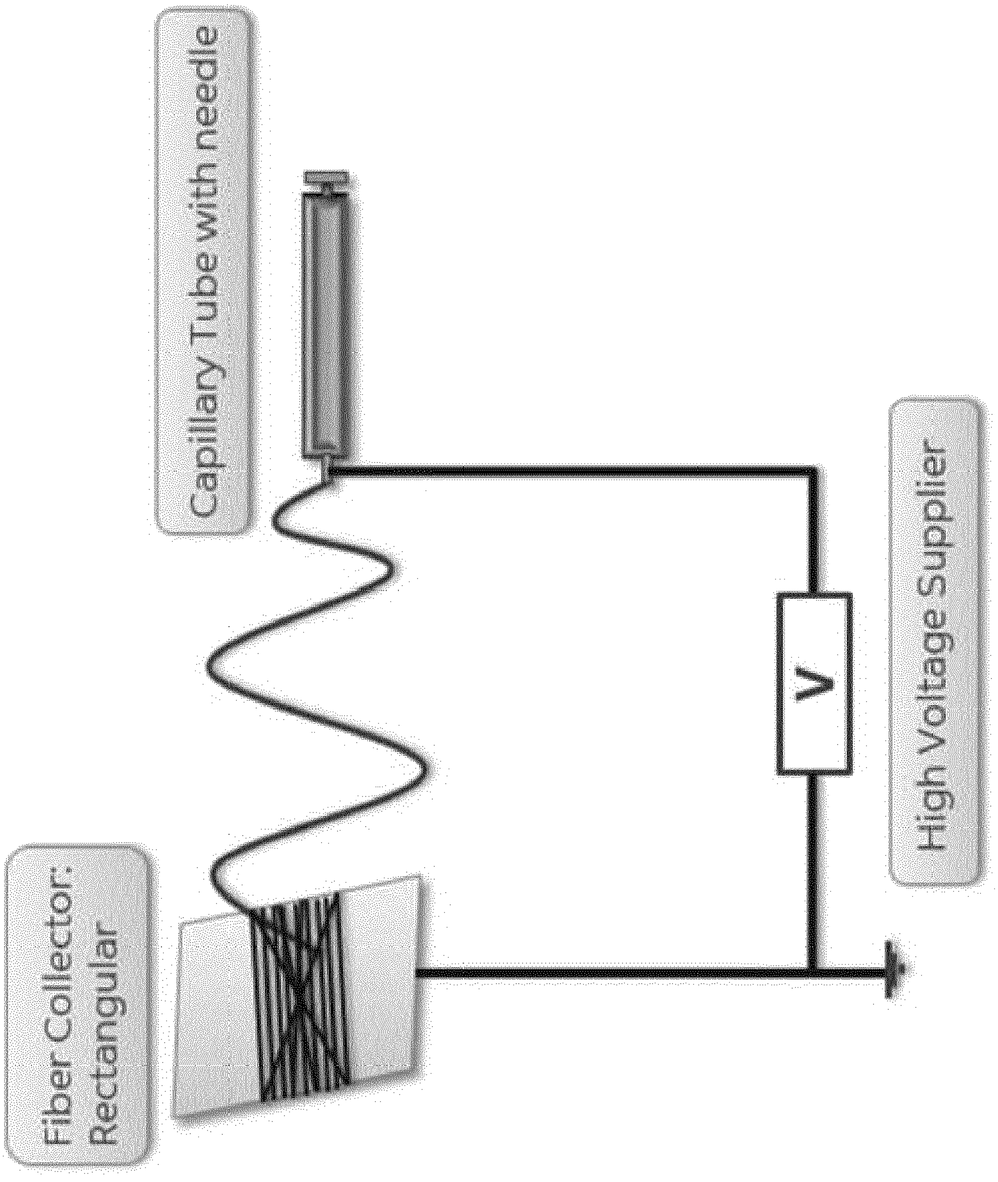
Capillary Tube with needle
Fiber Collector:
Rectangular
V
High Voltage Supplier

FIG. 5

THF:DMF (0:100)

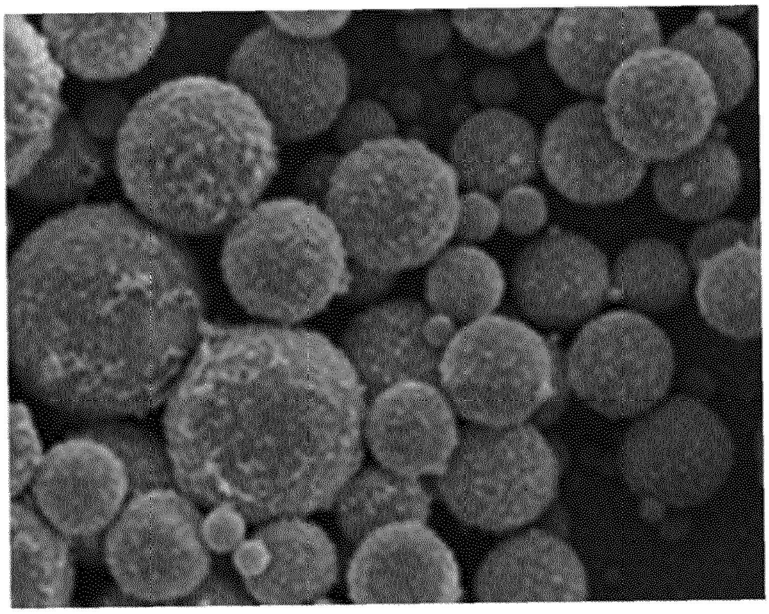

FIG. 6A

THF:DMF (20:80)

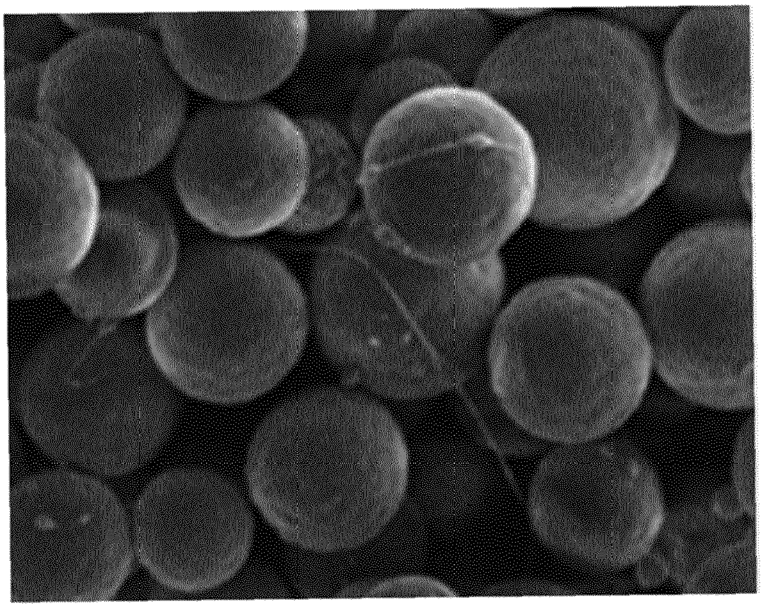

FIG. 6B

THF:DMF (30:70)

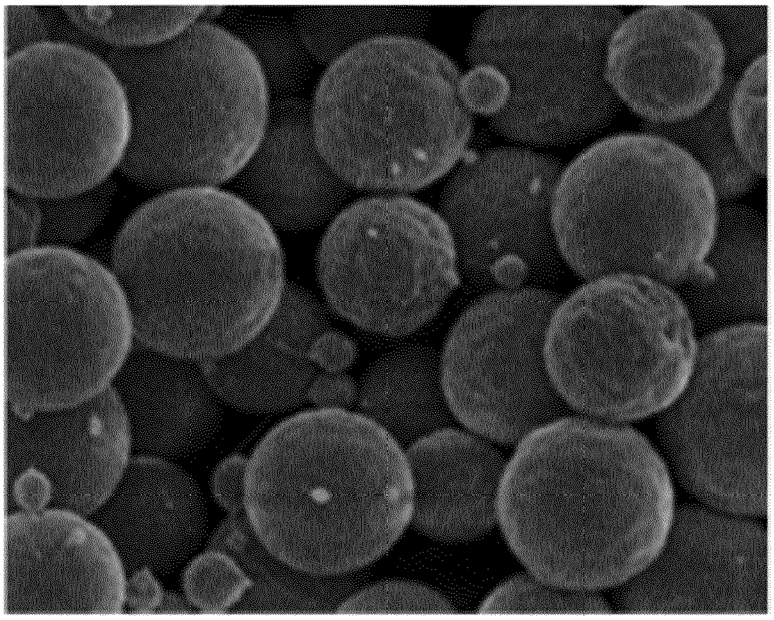

FIG. 6C

THF:DMF (100:0)

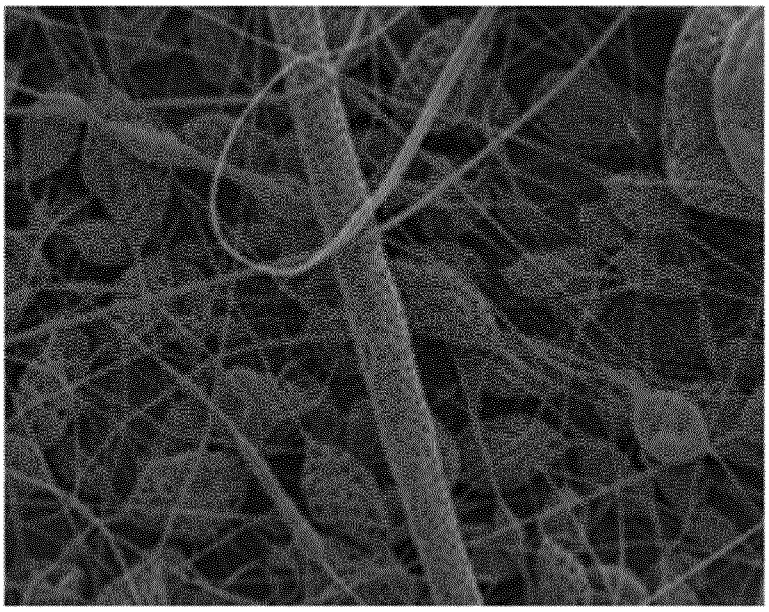

FIG. 6D

THF:DMF (80:20)

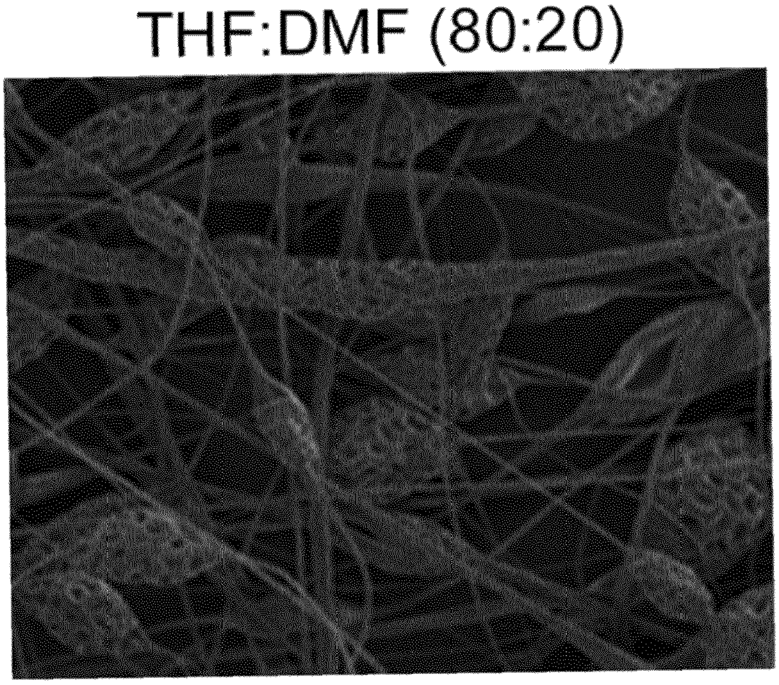

FIG. 6E

THF:DMF (70:30)

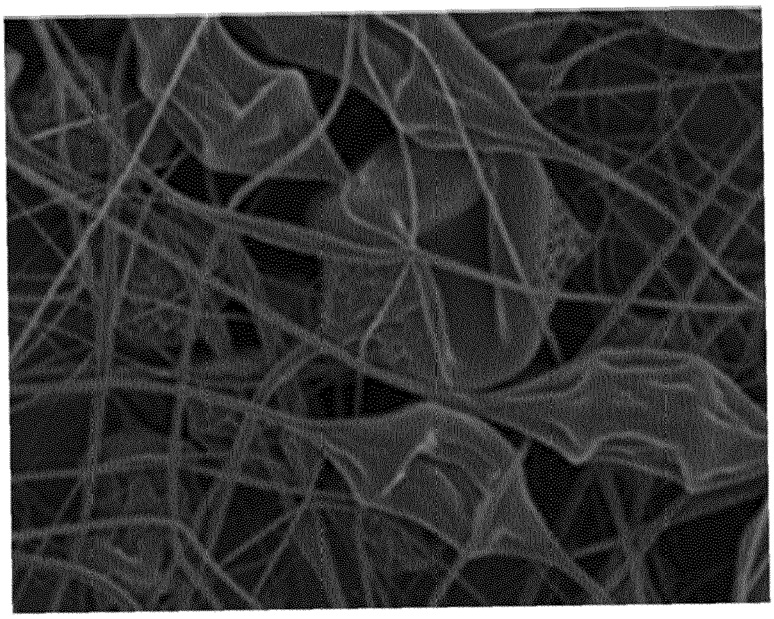

FIG. 6F

THF:DMF (50:50)

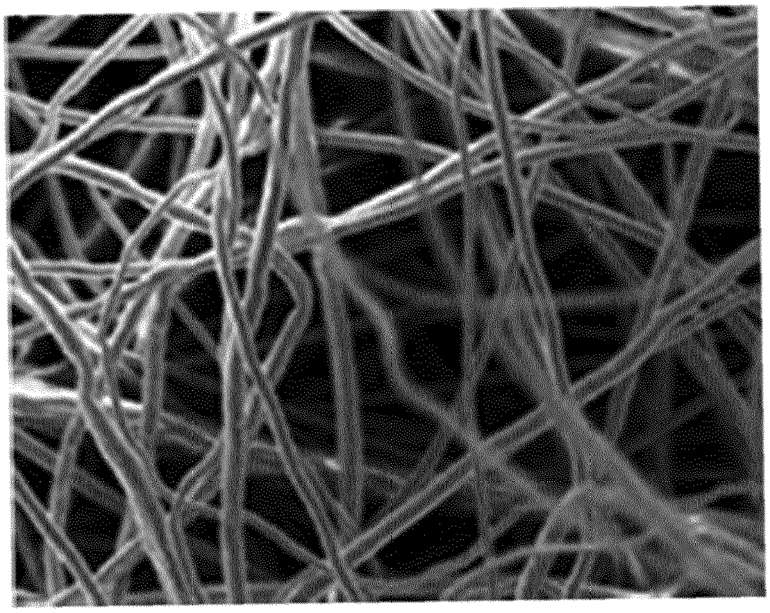

FIG. 6G

THF:DMF (50:50)

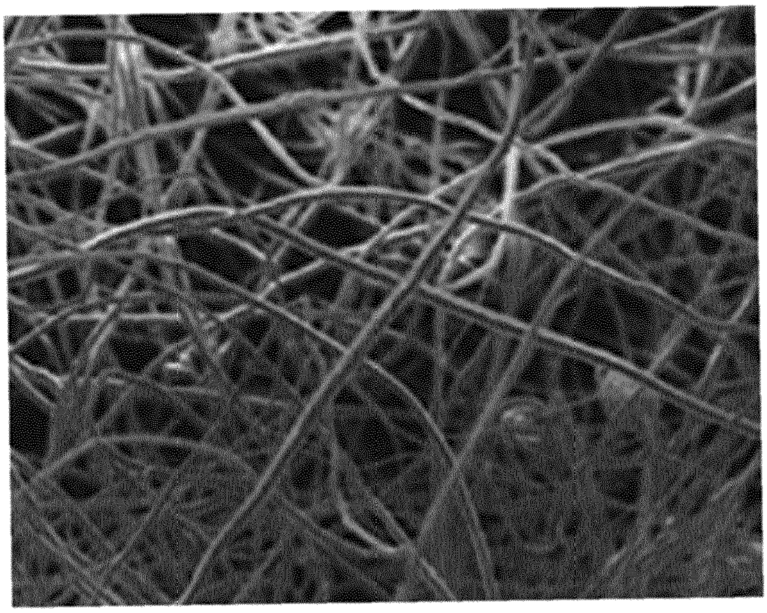

FIG. 6H

THF:DMF (50:50)

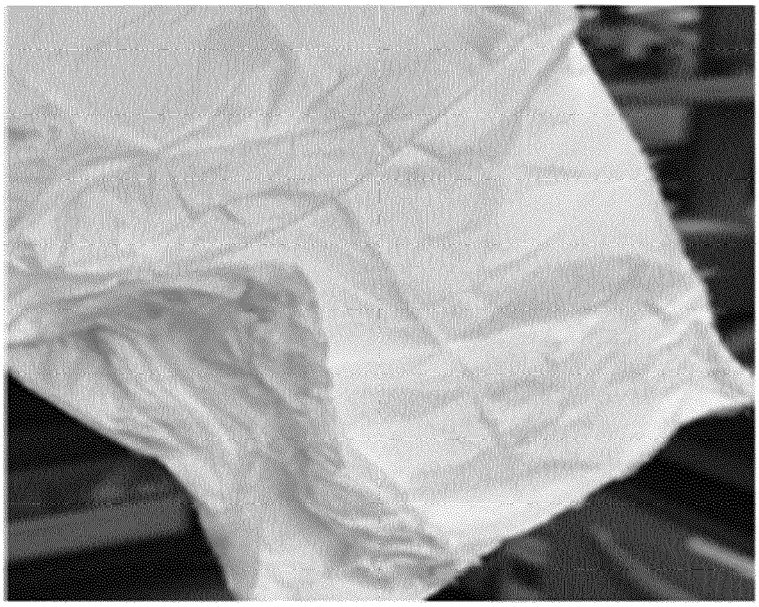

FIG. 6I

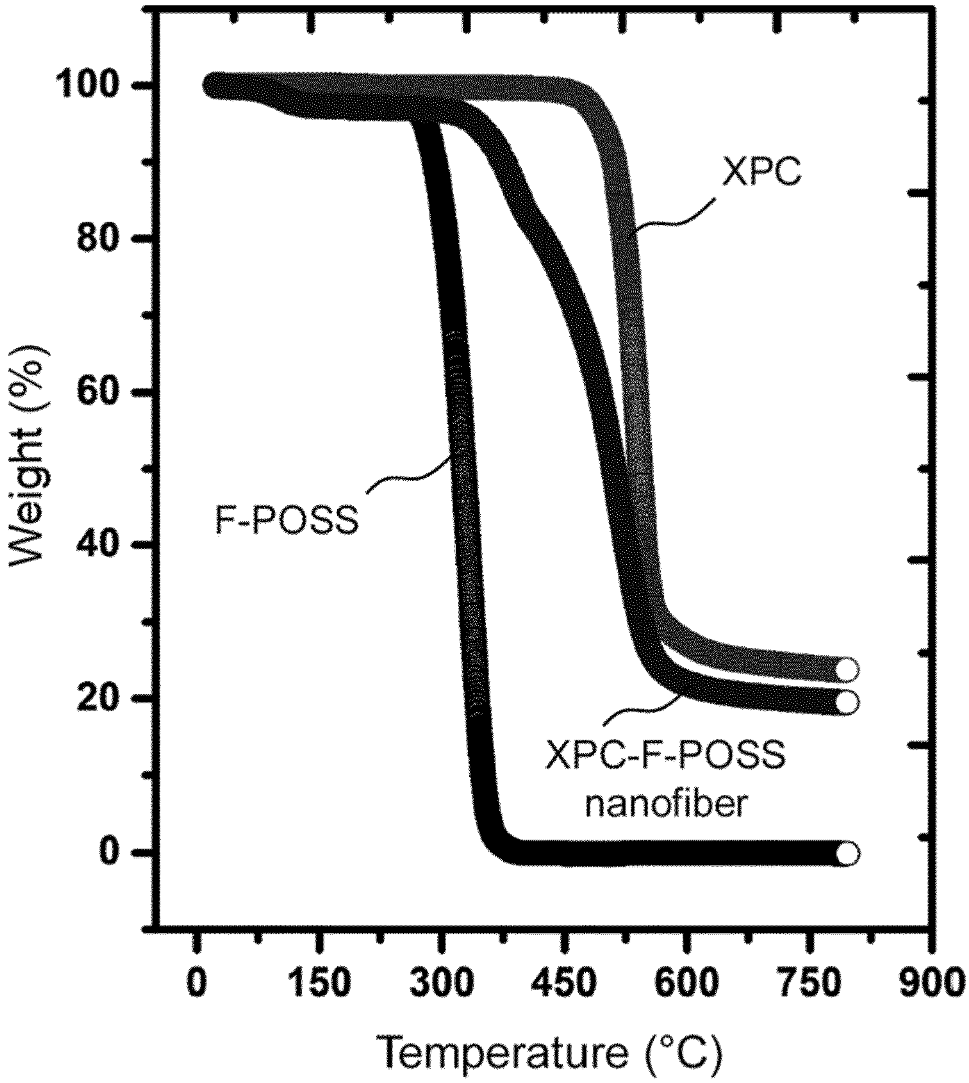
100
80
60
40
20
0
Weight (%)
0
150
300
450
600
750
900
Temperature (°C)
XPC
F-POSS
XPC-F-POSS
nanofiber

FIG. 7

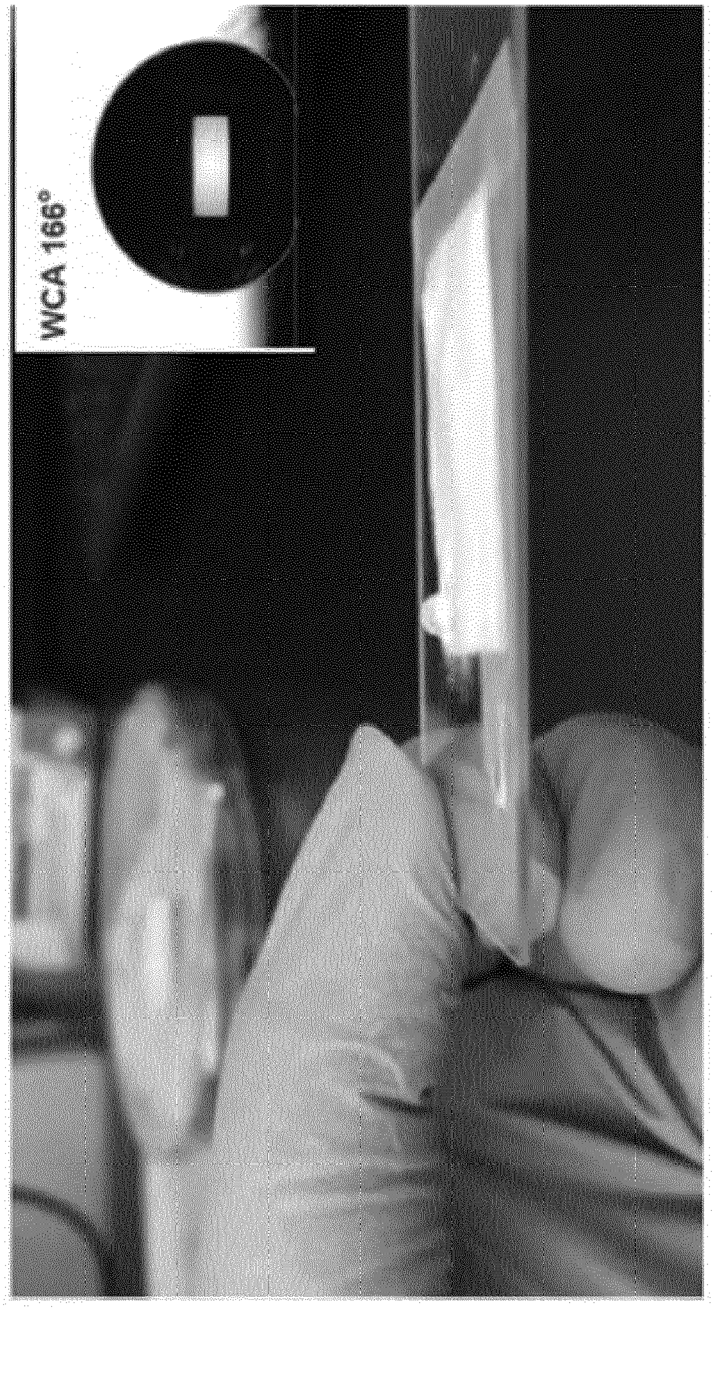


FIG. 8

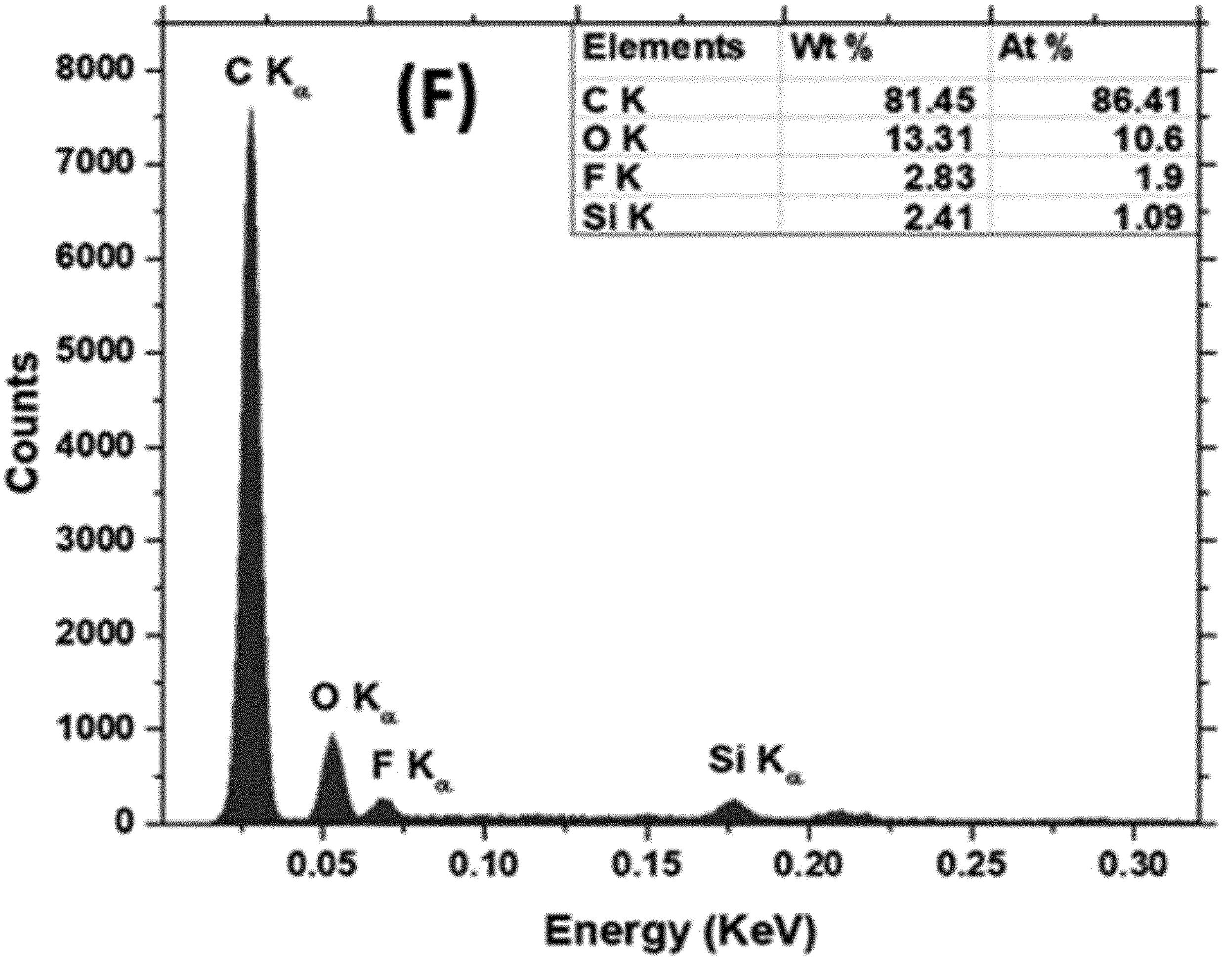
(F)
Elements
Wt %
At %
C K
81.45
86.41
O K
13.31
10.6
F K
2.83
1.9
Si K
2.41
1.09
C Kα
O Kα
F Kα
Si Kα
Counts
0
1000
2000
3000
4000
5000
6000
7000
8000
0.05
0.10
0.15
0.20
0.25
0.30
Energy (KeV)

FIG. 9

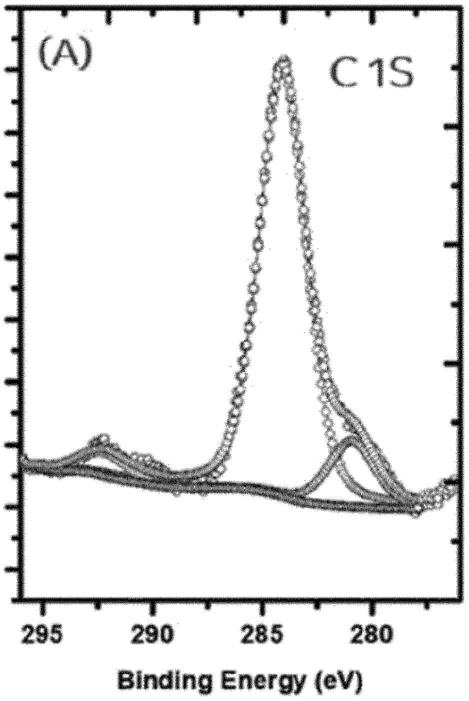


FIG. 10A

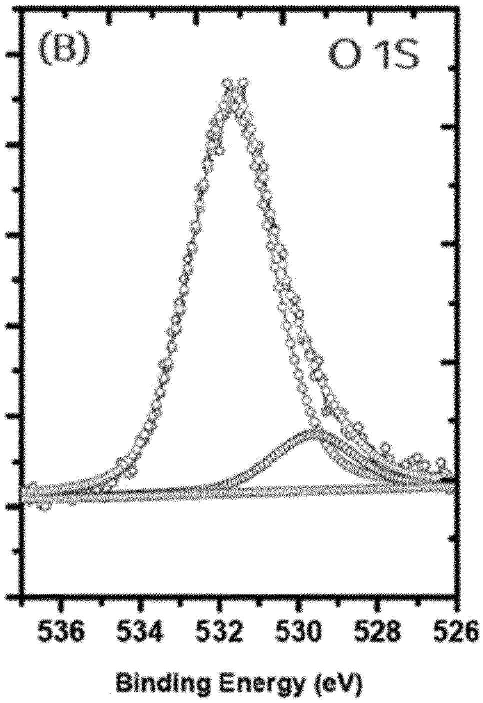


FIG. 10B

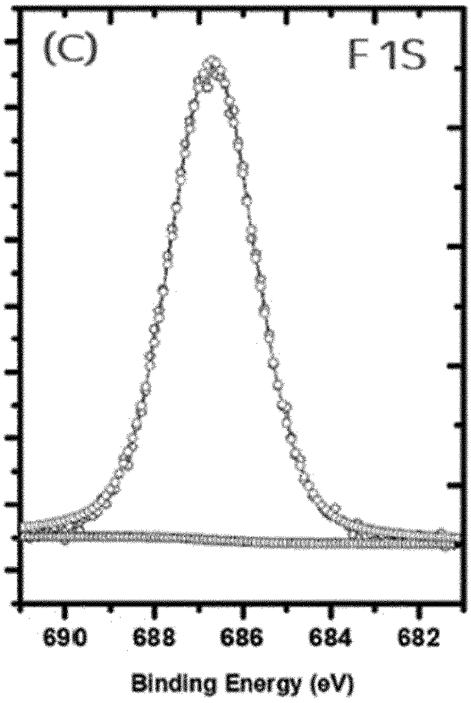


FIG. 10C

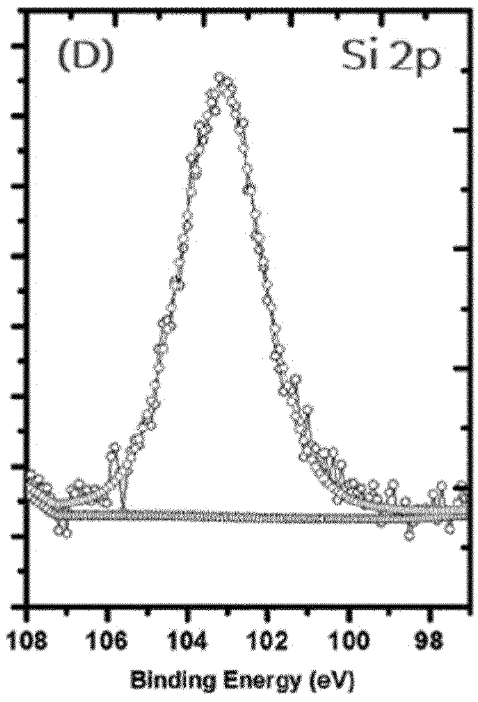


FIG. 10D

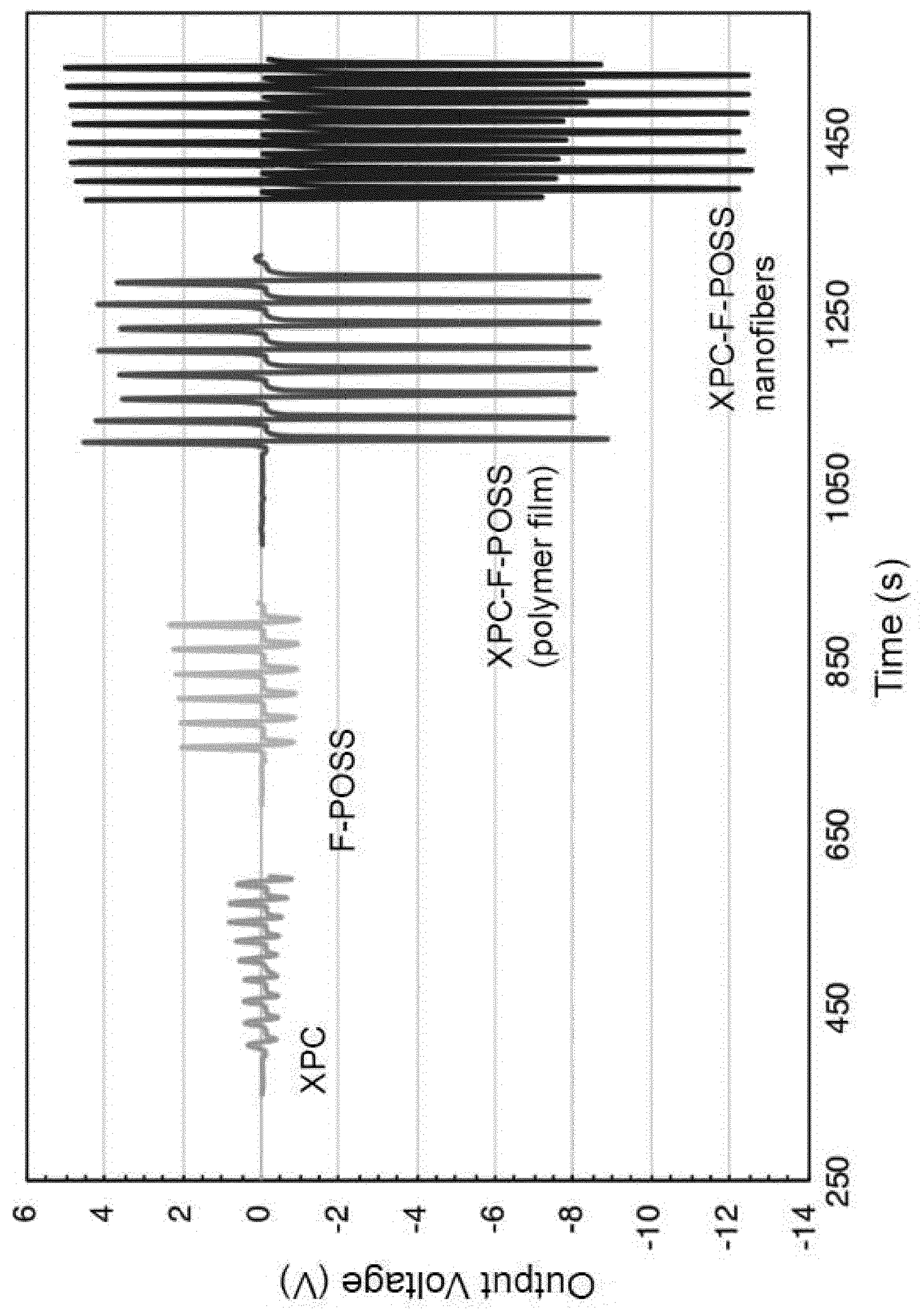
Output Voltage (V)
6
4
2
0
-2
-4
-6
-8
-10
-12
-14
Time (s)
250
450
650
850
1050
1250
1450
XPC
F-POSS
XPC-F-POSS
(polymer film)
XPC-F-POSS
nanofibers

FIG. 11

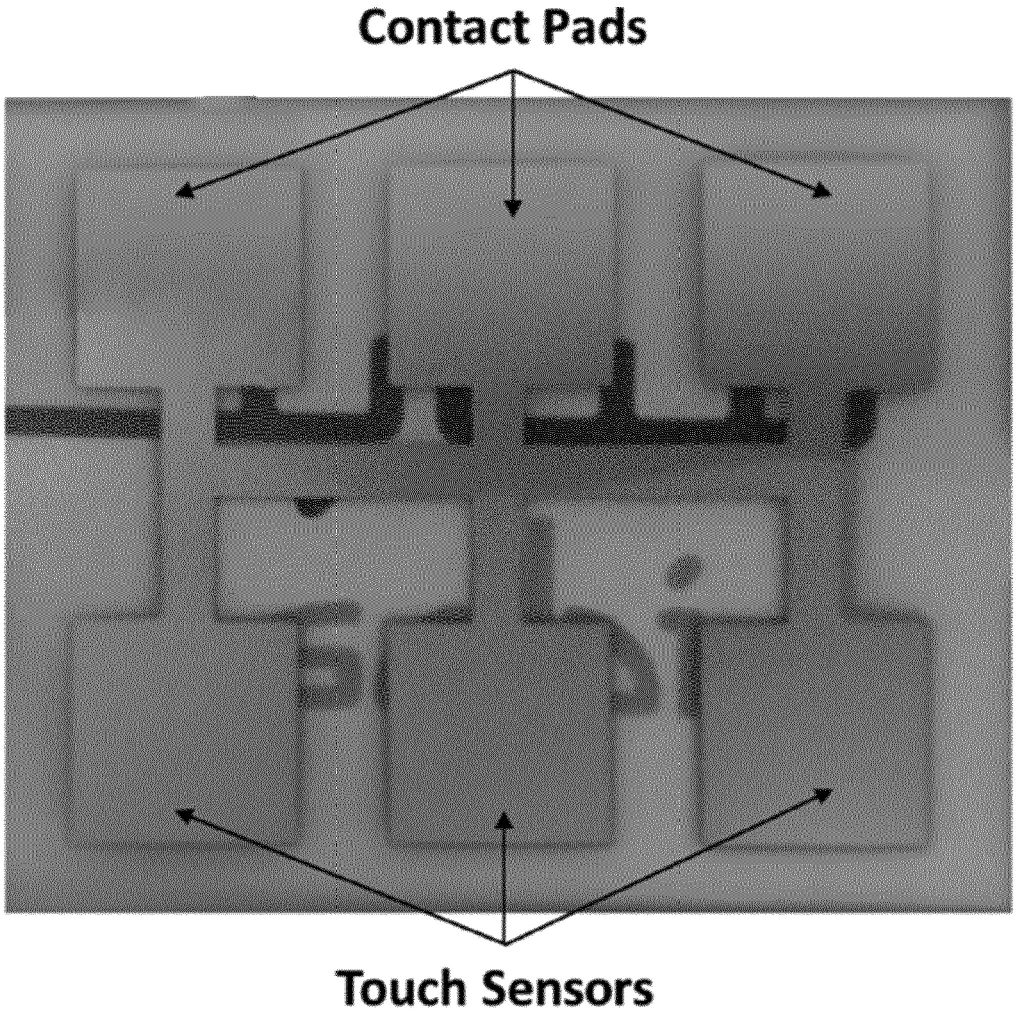


FIG. 12

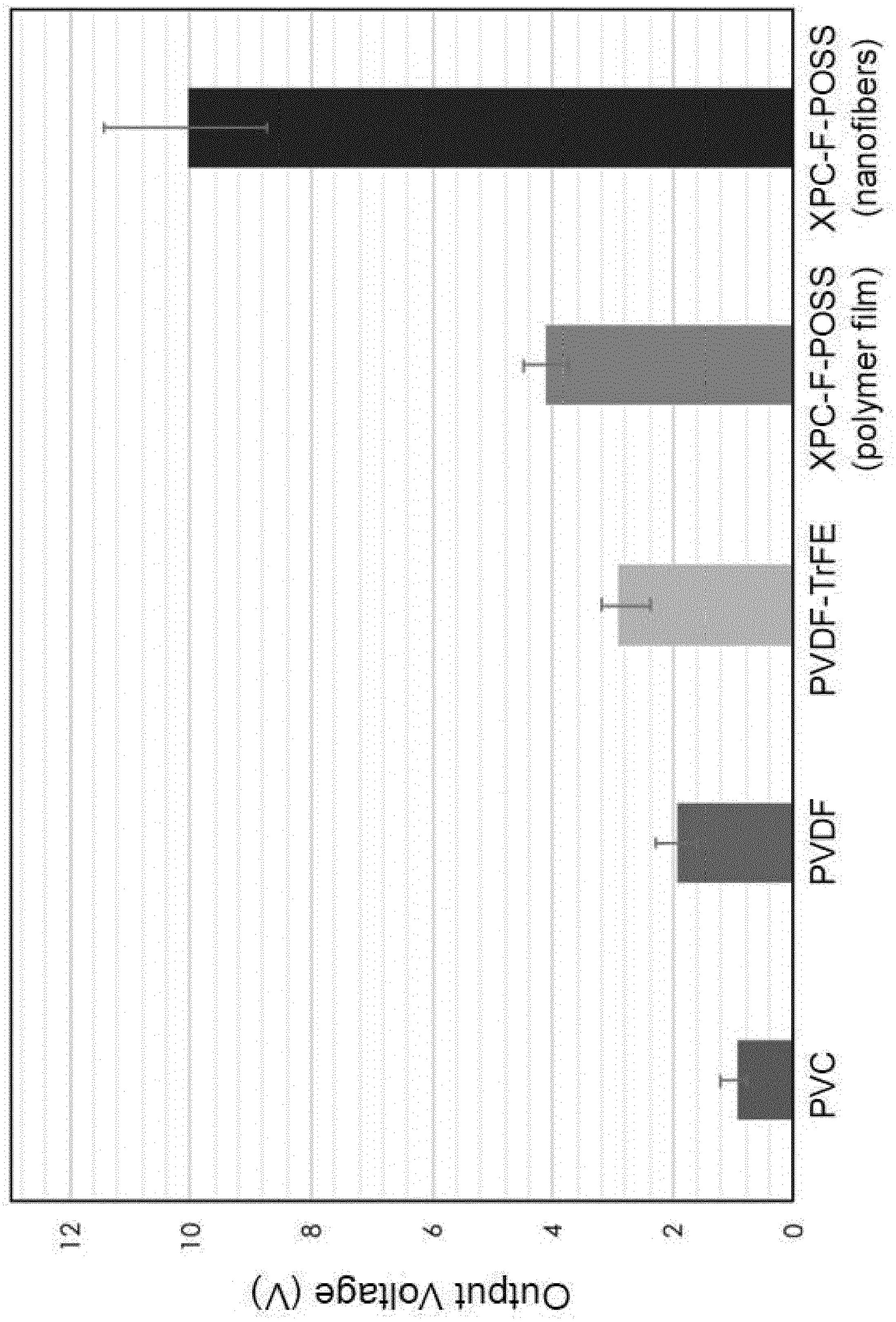
Output Voltage (V)
0
2
4
6
8
10
12
PVC
PVDF
PVDF-TrFE
XPC-F-POSS (polymer film)
XPC-F-POSS (nanofibers)

FIG. 13

Europäisches Patentamt
European Patent Office
Office européen des brevets

# EUROPEAN SEARCH REPORT

Application Number
EP 19 19 5586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 938 169 A (CAS GUANGZHOU CHEMISTRY CO LTD; UNIV CAS) 20 April 2018 (2018-04-20) * paragraphs [0010], [0013], [0014], [0015], [0027], [0028], [0030]; claim 1; example 1 * ----- | 1-15 | INV. D01D5/00 D01F1/10 H03K17/96 C08L69/00 D04H1/728 |
| Y | WO 2019/155376 A1 (SABIC GLOBAL TECHNOLOGIES BV [NL]) 15 August 2019 (2019-08-15) * paragraphs [0004], [0019], [3040], [0042], [0091]; claim 2 * ----- | 1-15 | |
| A | US 2015/232614 A1 (MORIZUR JEAN-FRANCOIS [US] ET AL) 20 August 2015 (2015-08-20) * paragraphs [0095], [0192], [0224], [0229]; claim 27 * ----- | 1-15 | |

TECHNICAL FIELDS SEARCHED (IPC)

D01D
D01F
H03K
C08G
C08L
C09J
D04H
D03D
A61M

The present search report has been drawn up for all claims

1

| Place of search | Date of completion of the search | Examiner |
|---|---|---|
| The Hague | 6 November 2019 | Van Beurden-Hopkins |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 19 5586

This annex lists the patent family members relating to the patent documents cited in the above-mentioned European search report. The members are as contained in the European Patent Office EDP file on
The European Patent Office is in no way liable for these particulars which are merely given for the purpose of information.

06-11-2019

| Patent document cited in search report | Publication date | Patent family member(s) | Publication date |
|---|---|---|---|
| CN 107938169 A | 20-04-2018 | NONE | |
| WO 2019155376 A1 | 15-08-2019 | NONE | |
| US 2015232614 A1 | 20-08-2015 | CN 104937009 A | 23-09-2015 |
| | | EP 2935398 A1 | 28-10-2015 |
| | | US 2014179821 A1 | 26-06-2014 |
| | | US 2015232614 A1 | 20-08-2015 |
| | | WO 2014100711 A1 | 26-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170247507 A